# EUROPÄISCHE PATENTANMELDUNG

(11) **EP 2 835 879 A1**
(43) Veröffentlichungstag der Anmeldung: **11.02.2015**
(21) Anmeldenummer: 13179607.0
(22) Anmeldetag: 07.08.2013
(51) Int. Cl.: H01R 39/38

(54) **Vorrichtung zum Übertragen eines elektrischen Stromes an einen drehbar gelagerten Rotationskörper**

(71) Anmelder: Siemens Aktiengesellschaft, 80333 München (DE)
(72) Erfinder: Hartmann, Ulrich, 14197 Berlin (DE); Rakowicz, Marian, 10247 Berlin (DE); Schiller, Christian, 12277 Berlin (DE); Schwengber, Robert, 15907 Lübben (DE)

(57) **Zusammenfassung**

Die Erfindung betrifft eine Vorrichtung zum Übertragen eines elektrischen Stromes an einen drehbar gelagerten Rotationskörper (10), welcher zumindest zwei Schleifringe (11) umfasst, mit einem Kontaktstückträger (1) und zumindest zwei Kontaktstücken (2), wobei der Kontaktstückträger (1) mit dem jeweiligen Kontaktstück (2) mechanisch verbunden ist, wobei das jeweilige Kontaktstück (2) derart anordenbar ist, dass bei Einbau in eine elektrische Maschine mit dem drehbar gelagerten Rotationskörper (14) das jeweilige Kontaktstück (2) in Kontakt mit dem jeweiligen Schleifring (11) ist. Weiterhin betrifft die Erfindung eine elektrische Maschine mit einer derartigen Vorrichtung und einem derartigen Rotationskörper (10). Um die Vorrichtung dahingehend weiterzubilden, dass zumindest zwei elektrische Phasen an den Rotationskörper (10) mit hoher Zuverlässigkeit übertragbar sind, wird vorgeschlagen, dass zwischen dem Kontaktstückträger (1) und dem jeweiligen Kontaktstück (2) eine elektrisch isolierende Schicht (3) angeordnet ist.

## Beschreibung

Die Erfindung betrifft eine Vorrichtung zum Übertragen eines elektrischen Stromes an einen drehbar gelagerten Rotationskörper, welcher zumindest zwei Schleifringe umfasst, mit einem Kontaktstückträger und zumindest zwei Kontaktstücken, wobei der Kontaktstückträger mit dem jeweiligen Kontaktstück mechanisch verbunden ist, wobei das jeweilige Kontaktstück derart anordenbar ist, dass bei Einbau in eine elektrische Maschine mit dem drehbar gelagerten Rotationskörper das jeweilige Kontaktstück in Kontakt mit dem jeweiligen Schleifring ist. Weiterhin betrifft die Erfindung eine elektrische Maschine mit einer derartigen Vorrichtung und einem derartigen Rotationskörper.

Eine derartige Vorrichtung kommt beispielsweise im Umfeld von fremderregten Synchronmaschinen zum Einsatz. Denn der Markt fordert langsam laufende Synchronmaschinen mit hohem Drehmoment, z.B. für Mühlen oder Kompressoren. Diese Art von Maschinen kennzeichnet unter anderem der große Durchmesser des Rotors. Der Rotor besteht bei diesen Lösungen aus der eigentlichen anzutreibenden Welle und den elektrisch aktiven Rotorteilen. Die elektrische Erregung solcher Maschinen erfolgt unter anderem über Schleifringe mit großem Durchmesser. Der Schleifring ist üblicherweise in der Maschine angeordnet, um die Schleifringleitung zwischen einer Polwicklung und dem Schleifring möglichst kurz zu gestalten.

Die Herstellung und Montage der erforderlichen Schleifringe ist aufwendig und stellt höchste Ansprüche an die Formgenauigkeit, insbesondere an Rund- und Planlauf, der zu montierenden Schleifringsegmente.

Für die Erregung elektrischer Maschinen werden unter anderem Bürstenträger benötigt. Diese Bürstenträger sind bisher in Abhängigkeit der Strombelastung und des Anpressdrucks der Bürstenhalter und der Erfordernisse baulicherseits für jeden Schleifringdurchmesser hergestellt worden.

Derzeit werden Bürstenträger an der Tragstruktur befestigt und die Befestigung und Einstellung der Bürsten erfolgt über Bürstenhalter, die radial zur Schleifringlauffläche eingestellt werden. Hierzu ist eine hohe Form- und Laufgenauigkeit des Schleifringes erforderlich.

Aus der GB 697 637 A ist eine Vorrichtung zum Übertragen eines elektrischen Stromes an einen drehbar gelagerten Rotationskörper bekannt, wobei der Rotationskörper zwei elektrisch miteinander verbundene Schleifringe aufweist. Die die Vorrichtung weist dabei einen Rahmen auf, der mittels Seilen an seiner Position in axialer Richtung und Umfangsrichtung gehalten wird. Der Rahmen weist dabei zwei jeweils mittels einer Feder mit dem Rahmen gekoppelte Bürsten auf, wobei die jeweilige Bürste auf dem Schleifring aufliegen soll. Weiterhin weist der Rahmen zwei Räder auf, welche jeweils auf dem jeweiligen Schleifring laufen.

Der Erfindung liegt die Aufgabe zugrunde, die eingangs genannte Vorrichtung dahingehend weiterzubilden, dass zumindest zwei elektrische Phasen an den Rotationskörper mit hoher Zuverlässigkeit übertragbar sind.

Diese Aufgabe wird durch eine Vorrichtung der eingangs genannten Art dadurch gelöst, dass zwischen dem Kontaktstückträger und dem jeweiligen Kontaktstück eine elektrisch isolierende Schicht angeordnet ist.

Weiterhin wird diese Aufgabe durch eine elektrische Maschine mit einer erfindungsgemäßen Vorrichtung und einem drehbar gelagerten Rotationskörper mit zumindest zwei Schleifringen gelöst.

Durch die elektrisch isolierende Schicht ist der Kontaktstückträger von den zumindest zwei Kontaktstücken elektrisch isoliert, wobei dennoch eine mechanische Kopplung ermöglicht wird. Dadurch kann der Kontaktstückträger seine Tragefunktion bezüglich der zumindest zwei Kontaktstücke erfüllen. Dies erlaubt weiterhin, mehrere elektrische Phasen, beispielsweise die drei Phasen für die Übertragung von Drehstrom, an einem Rotationskörper mit mehreren Schleifringen zu übertragen und dabei die erfindungsgemäße Vorrichtung mit einem sehr kompakten Kontaktstückträger zu verwenden. Dabei kann die elektrische Energie vom jeweiligen Kontaktstück an den jeweiligen Schleifring übertragen, wobei für jede elektrische Phase eine separate Zuführungsleitung vorgesehen sein kann, welche jeweils vom Kontaktstückträger elektrisch isoliert ist.

Insbesondere kann das jeweilige Kontaktstück ein Federelement und eine elektrisch leitende Bürste aufweisen, wobei die elektrisch leitende Bürste über das Federelement mit dem Kontaktstückträger mechanisch gekoppelt ist. Dadurch wird die Zuverlässigkeit des elektrischen Kontaktes zwischen dem jeweiligen Kontaktstück und dem jeweiligen Schleifring zusätzlich erhöht. Denkbar ist auch, je Kontaktstück zwei oder mehr elektrisch leitende Bürsten mit zugehörigen Federelementen vorzusehen, um die Zuverlässigkeit des elektrischen Kontaktes des jeweiligen Kontaktstücks mit dem jeweiligen Schleifring zu erhöhen.

Durch die Anordnung eines freibeweglichen Bürstenträgers können Form- und Rundlauffehler des Rotationskörpers und insbesondere des jeweiligen Schleifrings kompensiert werden. Der Kontaktstückträger läuft somit elektrisch isoliert zur Schleifringfläche mit und erlaubt, Form- und Rundlauffehler sowie Balligkeit der Schleifringlauffläche auszugleichen.

Ein Gedanke der vorliegenden Erfindung liegt in der Anordnung des Kontaktstückträgers zum jeweiligen Schleifring, wobei die Anordnung derart erfolgt, dass ein Ausgleich von relativen Bewegungen in möglichst allen Richtungen, beispielsweise Exzentrizitäten und Schiefstellungen, möglich ist und ein zuverlässiger Betrieb der Maschine gewährleistet wird. Durch die Lagerung des Bürstenträgers auf dem Schleifring lassen sich die Fertigungskosten des Schleifringes und des Bürstenträgers reduzieren. Weiterhin wird die Montage von Bürstenträgern und Schleifringen mit großen Durchmessern erheblich vereinfacht.

Bei einer vorteilhaften Ausgestaltung der Erfindung ist der Kontaktstückträger mit dem jeweiligen Kontaktstück mittels eines jeweiligen elastischen Elementes gekoppelt.

Dabei kann die Kopplung mittels des jeweiligen elastischen Elementes eine Auslenkung und eine entsprechende Rückstellkraft in radialer Richtung, in axialer Richtung und/oder in Umfangsrichtung ermöglichen. Das jeweilige elastische Element kann beispielsweise als Feder oder als Gelenkaufhängung ausgeführt sein. Beispielsweise wird bei einem jeweiligen elastischen Element mit einer radialen Auslenkung eine besondere Toleranz der Vorrichtung gegenüber Exzentrizitäten des Rotationskörpers bzw. des jeweiligen Schleifrings, das heißt Abweichungen in Bezug auf Rundlauf, gewährleistet. Ein jeweiliges elastisches Element mit einer Auslenkung in axialer Richtung bzw. in Umfangsrichtung ermöglicht, eine gewisse Schiefstellung der zumindest zwei Kontaktstücke zueinander, wobei eine derartige Schiefstellung beispielsweise bei Abweichungen bezüglich Planlauf auftreten kann. Die Schiefstellung ist dabei so zu verstehen, dass eines der Kontaktstücke gegenüber einem anderen Kontaktstück in Umfangsrichtung zurückbleibt.

Derartige Abweichungen können insbesondere bei Rotationskörpern für leistungsstarke elektrische Maschinen, beispielsweise mit Leistungen über 1 MW, beträchtliche Ausmaße annehmen, weil derartige Maschinen bzw. deren Schleifringe oftmals Durchmesser von deutlich über 1 m, insbesondere über 3 m haben. Daher können im Promillebereich liegende Abweichungen des realen Rotationskörpers von der Sollform schon zu Abweichungen von mehreren Millimetern führen, welche die Zuverlässigkeit des elektrischen Kontaktes des jeweiligen Kontaktstückes mit dem jeweiligen Schleifring stark beeinträchtigen können. Dies rührt auch daher, dass bei derart großen Maschinen der jeweilige Schleifring aus Schleifringsegmenten zusammengesetzt wird und beim Zusammenbau nicht immer die wünschenswerte Präzision gewährleistet werden kann. Die dank des jeweiligen elastischen Elementes erhöhte Toleranz gegenüber Abweichungen des Rotationskörpers von seiner Soll-Form trägt daher wesentlich zur Erhöhung der Zuverlässigkeit der Vorrichtung bei.

Bei einer weiteren vorteilhaften Ausgestaltung der Erfindung weist die Vorrichtung zumindest ein Führungselement auf, wobei das jeweilige Führungselement derart anordenbar ist, dass bei Einbau in eine elektrische Maschine mit dem drehbar gelagerten Rotationskörper das jeweilige Führungselement in Kontakt mit zumindest einer Oberfläche des drehbar gelagerten Rotationskörpers ist.

Das zumindest eine Führungselement verbessert die Zuverlässigkeit des elektrischen Kontaktes zwischen dem jeweiligen Kontaktstück den jeweiligen Schleifring, indem es insbesondere als Referenzpunkt für das jeweilige Kontaktstück dient.

Beispielsweise kann mittels des zumindest einen Führungselementes eine zu große Anpresskraft des jeweiligen Kontaktstücks auf den jeweiligen Schleifring verhindert werden. Dies kann dadurch erreicht werden, dass das zumindest eine Führungselement eine Kraft auf die jeweilige Oberfläche ausübt, welche in dieselbe Richtung weist wie jene Kraft, mit der das Kontaktstück auf den jeweiligen Schleifring drückt. Da insbesondere bei mangelhaftem Rundlauf eine zu große Anpresskraft des Kontaktstücks auf den jeweiligen Schleifring zu einem "Abhüpfen" des Kontaktstücks vom jeweiligen Schleifring und somit zu einem unterbrochenen Kontakt führen kann, wirkt sich das zumindest eine Führungselement vorteilhaft auf die Zuverlässigkeit der Vorrichtung aus.

Ein "Abhüpfen" des Kontaktstücks vom jeweiligen Schleifring kann auch dadurch verhindert werden, dass die zumindest eine Oberfläche bei einer Draufsicht auf den Schleifring hinter der Schleifringoberfläche angeordnet ist. So kann mittels des zumindest einen Führungselements zuverlässig eine erhöhte Anpresskraft des Kontaktstücks auf den jeweiligen Schleifring erreicht werden.

Die zumindest eine Oberfläche des Rotationskörpers kann dabei beispielsweise eine Oberfläche des jeweiligen Schleifrings sein, so dass das jeweilige Führungselement im Kontakt mit dem jeweiligen Schleifring ist. Dabei kann vorgesehen sein, dass das jeweilige Führungselement direkt am Kontaktstück befestigt ist, wodurch zum einen eine besonders gute Führung des Kontaktstücks auf dem jeweiligen Schleifring erreicht wird und zum anderen das jeweilige Führungselement gegenüber dem Kontaktstückträger elektrisch isoliert ist.

Das jeweilige Führungselement kann dabei beispielsweise als Element einer Gleitführung, insbesondere einer Schienenführung, oder als Element einer Wälzführung, insbesondere als auf dem Rotationskörper abrollende Führungsrolle, ausgeführt sein. Durch das Abrollen des Kontaktstücks bzw. Kontaktstückträgers auf dem jeweiligen Schleifring werden Fehler des Planlaufs des jeweiligen Schleifrings bzw. der Tragstruktur ausgeglichen. Weiterhin können mit dieser Anordnung nicht nur radiale, sondern auch axiale Kontaktflächen für einen Schleifring verwendet werden.

Bei einer weiteren vorteilhaften Ausgestaltung der Erfindung sind dabei jeweils zwei Führungselemente derart anordenbar, dass bei Einbau in eine elektrische Maschine mit dem drehbar gelagerten Rotationskörper die jeweilige Oberfläche zwischen den beiden Führungselementen angeordnet ist.

Dies bedeutet, dass die jeweils zwei Führungselemente in einer Linie angeordnet sind, wobei die jeweiligen Oberflächen auf dieser Linie liegen und von den jeweils zwei Führungselementen eingerahmt werden. Durch eines der beiden Führungselemente kann beispielsweise eine zu große Anpresskraft des jeweiligen Kontaktstücks auf den jeweiligen Schleifring verhindert werden, indem das eine Führungselement eine Kraft auf die zugehörige Oberfläche ausübt, welche in dieselbe Richtung weist wie jene Kraft, mit der das Kontaktstück auf den jeweiligen Schleifring drückt. Das eine Führungselement verhindert somit ein "Abhüpfen" des Kontaktstücks vom jeweiligen Schleifring, wie weiter oben schon erläutert. Das andere der beiden Führungselemente ist entsprechend gegenüber liegend angeordnet, so dass die zugehörige Oberfläche bei einer Draufsicht auf den Schleifring hinter der Schleifringoberfläche angeordnet ist. Durch das andere der beiden Führungselemente kann somit zuverlässig eine erhöhte Anpresskraft des Kontaktstücks auf den jeweiligen Schleifring erreicht werden.

Die jeweils zwei Führungselemente gewährleisten daher eine hohe Zuverlässigkeit des elektrischen Kontaktes zwischen dem jeweiligen Kontaktstück und dem jeweiligen Schleifring.

Bei einer weiteren vorteilhaften Ausgestaltung der Erfindung weist die Vorrichtung ein Halteelement und ein weiteres elastisches Element auf, wobei das Halteelement über das weitere elastische Element mit dem Kontaktstückträger mechanisch gekoppelt ist.

Somit wird der Kontaktstückträger mit dem zumindest zwei Kontaktstücken durch das Halteelement gehalten, wozu das Halteelement beispielsweise an einem festen Bezugspunkt der elektrischen Maschine befestigt wird. Da der Kontaktstückträger somit selbst elastisch gelagert ist, können Form- und Rundlauffehler sowie Balligkeit der Schleifringlauffläche besonders gut ausgeglichen werden. Dies wird durch das weitere elastische Element erreicht, welches beispielsweise eine Auslenkung in dieselbe Richtung wie das Federelement des jeweiligen Kontaktstücks erlaubt, was eine besonders große Auslenkung des jeweiligen Kontaktstücks ermöglicht. Durch die elastische Kopplung des Halteelements mit dem Kontaktstückträger kann ein zuverlässiger Kontakt auch bei einer möglichen Schiefstellung der zumindest zwei Kontaktstücke gewährleistet werden.

Bei einer weiteren vorteilhaften Ausgestaltung der Erfindung ist zumindest eines der Kontaktstücke in radialer Richtung versetzt zum jeweiligen Schleifring anordenbar.

Dies kann dadurch erreicht werden, dass der jeweilige Schleifring eine Kontaktfläche aufweist, die radial nach außen oder innen weist, und das jeweilige Kontaktstück den Schleifring in radialer Richtung auf seiner Kontaktfläche berührt. Denkbar ist auch, dass mehrere oder alle Kontaktstücke der Vorrichtung in radialer Richtung versetzt zum jeweiligen Schleifring angeordnet sind.

Bei einer weiteren vorteilhaften Ausgestaltung der Erfindung ist zumindest eines der Kontaktstücke in axialer Richtung versetzt zum jeweiligen Schleifring anordenbar.

Dies kann dadurch erreicht werden, dass der jeweilige Schleifring eine Kontaktfläche aufweist, die in axiale Richtung weist und das jeweilige Kontaktstück den Schleifring in axialer Richtung auf seiner Kontaktfläche berührt. Denkbar ist auch, dass mehrere oder alle Kontaktstücke der Vorrichtung in axialer Richtung versetzt zum jeweiligen Schleifring angeordnet sind.

Zusätzlich ist eine Kombination von in Bezug auf den jeweiligen Schleifring in radialer Richtung und in axialer Richtung versetzt angeordneten Kontaktstücken möglich.

Bei einer weiteren vorteilhaften Ausgestaltung der Erfindung ist dabei zwischen der jeweiligen Oberfläche und den zumindest zwei Schleifringen zumindest eine weitere elektrisch isolierende Schicht angeordnet.

Dadurch, dass das jeweilige Führungselement nicht direkt auf dem jeweiligen Schleifring aufliegt, wird eine Beschädigung bzw. übermäßige Abnutzung jeweiligen Schleifrings verhindert, was die Lebensdauer des jeweiligen Schleifrings erhöht. Insbesondere wenn das jeweilige Führungselement direkt am Kontaktstückträger befestigt ist, wird durch die zumindest eine weitere elektrisch isolierende Schicht gewährleistet, dass die elektrische Spannung des jeweiligen Schleifrings lediglich auf eine möglichst geringe Anzahl von Teilen übertragen wird. Insbesondere wird für die Vorrichtung keine zusätzliche elektrische Isolierung zwischen dem jeweiligen Führungselement und dem Kontaktstückträger benötigt.

Bei einer weiteren vorteilhaften Ausgestaltung der Erfindung ist die elektrische Maschine als Windkraftgenerator, Ringmotor, Mühlenantrieb oder Kompressorantrieb ausgeführt. Vorzugsweise weist die elektrische Maschine dabei eine Leistung von mehr als 1 MW, insbesondere mehr als 15 MW auf.

Die vorliegende Erfindung kann besonders vorteilhaft bei elektrischen Maschinen mit elektrischer Schleifringerregung, langsamer Drehzahl und großen Durchmessern, insbesondere größer 1 m oder größer 3 m, eingesetzt werden, wie z.B. Antriebe von Windkraftanlagen, Rohrmühlen oder Kompressoren.

Im Folgenden wird die Erfindung anhand der in den Figuren dargestellten Ausführungsbeispiele näher beschrieben und erläutert. Es zeigen:
- FIG 1: ein erstes Ausführungsbeispiel der erfindungsgemäßen Vorrichtung sowie einen drehbar gelagerten Rotationskörper und
- FIG 2-6: die Ausführungsbeispiele 2-6 der erfindungsgemäßen Vorrichtung.

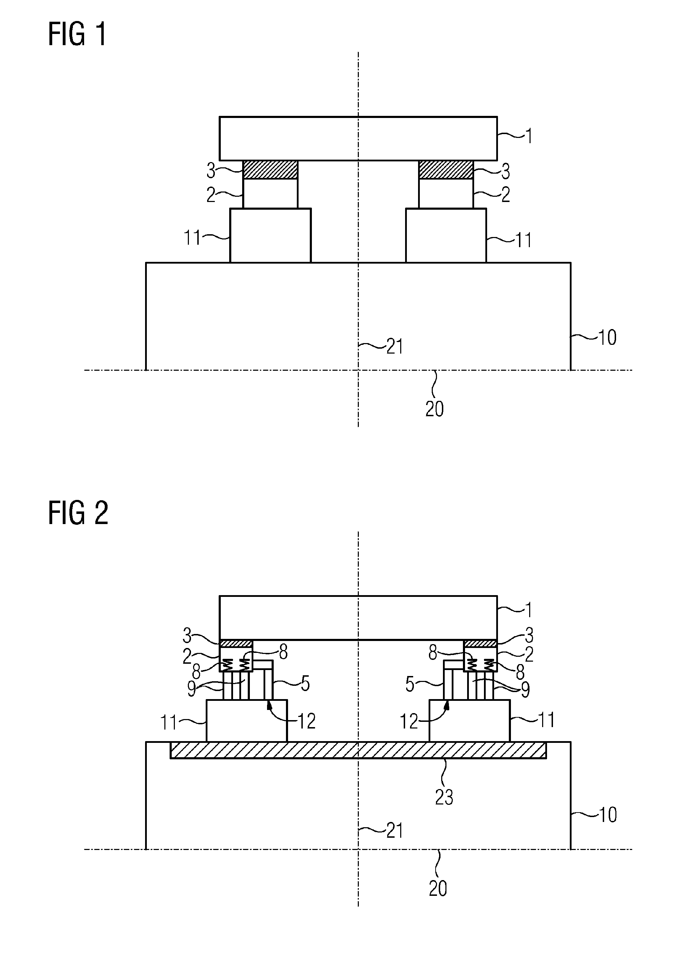

Figur 1 zeigt ein erstes Ausführungsbeispiel der erfindungsgemäßen Vorrichtung sowie einen drehbar gelagerten Rotationskörper 10. Die Vorrichtung weist einen Kontaktstückträger 1 mit zwei Kontaktstücken 2 auf, wobei zwischen dem Kontaktstückträger 1 und dem jeweiligen Kontaktstück 2 eine elektrisch isolierende Schicht 3 angeordnet ist. Der Rotationskörper 10 weist zwei Schleifringe 11 auf, wobei die Vorrichtung einen zuverlässigen elektrischen Kontakt des jeweiligen Kontaktstücks 2 mit dem jeweiligen Schleifring 11 gewährleistet.

Der Rotationskörper 11 kann dabei um die Rotationsachse 20 drehbar sein, so dass die Kontaktstücke 2 in radialer Richtung versetzt zum jeweiligen Schleifring 11 angeordnet sind. Alternativ kann der Rotationskörper 11 um die Rotationsachse 21 drehbar sein, wobei die beiden Kontaktstücke 2 somit in axialer Richtung versetzt zum jeweiligen Schleifring 11 angeordnet sind.

Die beiden alternativen Rotationsachse 20 und 21 sind auch in den weiteren Ausführungsbeispielen eingezeichnet, um zu verdeutlichen, dass ein jeweiliges Kontaktstück 2 in radialer bzw. axialer Richtung versetzt zum jeweiligen Schleifring 11 angeordnet sein kann. Prinzipiell ist auch denkbar, ein Kontaktstück 2 in radialer Richtung versetzt und ein weiteres Kontaktstück 2 in axialer Richtung versetzt zum jeweiligen Schleifring 11 anzuordnen.

Figur 2 zeigt ein zweites Ausführungsbeispiel. In Ergänzung zum ersten Ausführungsbeispiel weisen die beiden Kontaktstücke 2 der Vorrichtung gemäß dem zweiten Ausführungsbeispiel jeweils zwei Bürsten 9 auf, welche jeweils mittels Federelementen 8 elastisch gehalten werden.

Weiterhin weist die Vorrichtung zwei Führungselemente 5 auf, welche jeweils an einem der Kontaktstücke 2 befestigt sind und mit einer jeweiligen Oberfläche 12 in Kontakt sind. Dabei ist die jeweilige Oberfläche 12 eine Oberfläche des jeweiligen Schleifrings 11, der Teil des Rotationskörpers 10 ist. Dabei können die beiden Führungselemente 5 als Führungsrollen ausgeführt sein, welche auf der jeweiligen Oberfläche 12 abrollen.

Der Rotationskörper 10 weist weiterhin eine Isolierschicht 23 auf, welche die beiden Schleifringe 11 elektrisch von einander isoliert.

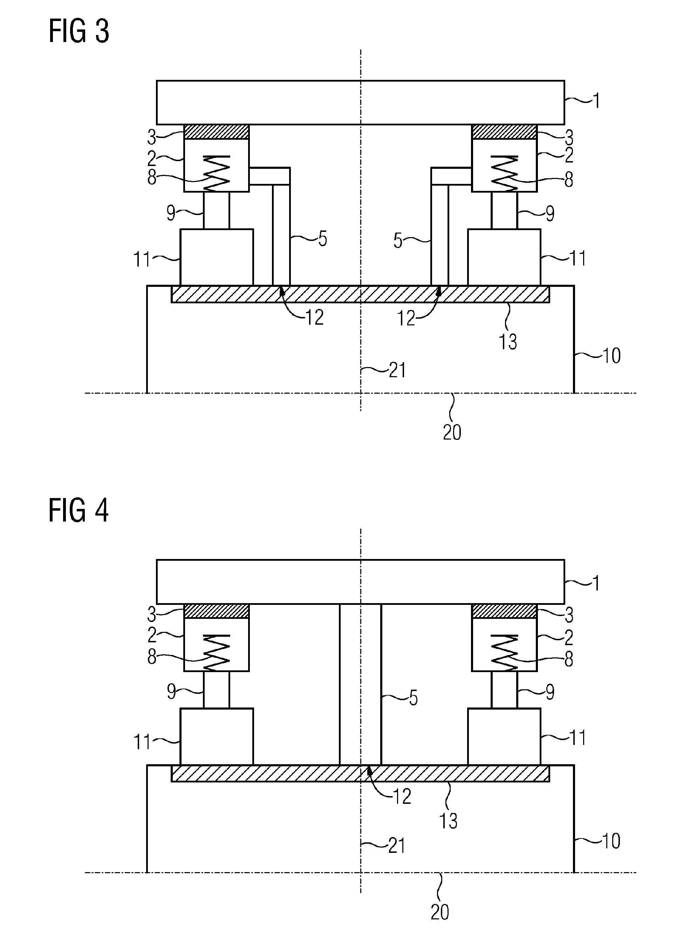

Figur 3 zeigt ein drittes Ausführungsbeispiel. Das dritte Ausführungsbeispiel weist ähnlich wie das zweite Ausführungsbeispiel Bürsten 9 auf, welche jeweils mittels eines Federelements 8 mit dem jeweiligen Kontaktstück 2 und schließlich dem Kontaktstückträger 1 elastisch gekoppelt sind. Im Rahmen dieses Ausführungsbeispiels ist dabei eine Bürste 9 pro Kontaktstück 2 vorgesehen.

Weiterhin weist die Vorrichtung zwei Führungselemente 5 auf, welche jeweils mit einem der Kontaktstücke 2 gekoppelt sind und eine Oberfläche 12 des Rotationskörpers 10 berühren. Dabei ist zwischen der jeweiligen Oberfläche 12 und den zwei Schleifringen 11 eine weitere elektrisch isolierende Schicht 13 angeordnet.

Figur 4 zeigt ein viertes Ausführungsbeispiel. Das vierte Ausführungsbeispiel ist dem dritten Ausführungsbeispiel ähnlich, unterscheidet sich jedoch in der Ausgestaltung des Führungselements 5. Nunmehr ist ein Führungselement 5 vorgesehen, welches mit dem Kontaktstückträger 1 gekoppelt ist und auf einer Oberfläche 12 des Rotationskörpers 10 aufliegt. Wiederum ist zwischen der Oberfläche 12 und den zwei Schleifringen 11 eine weitere elektrisch isolierende Schicht 13 angeordnet.

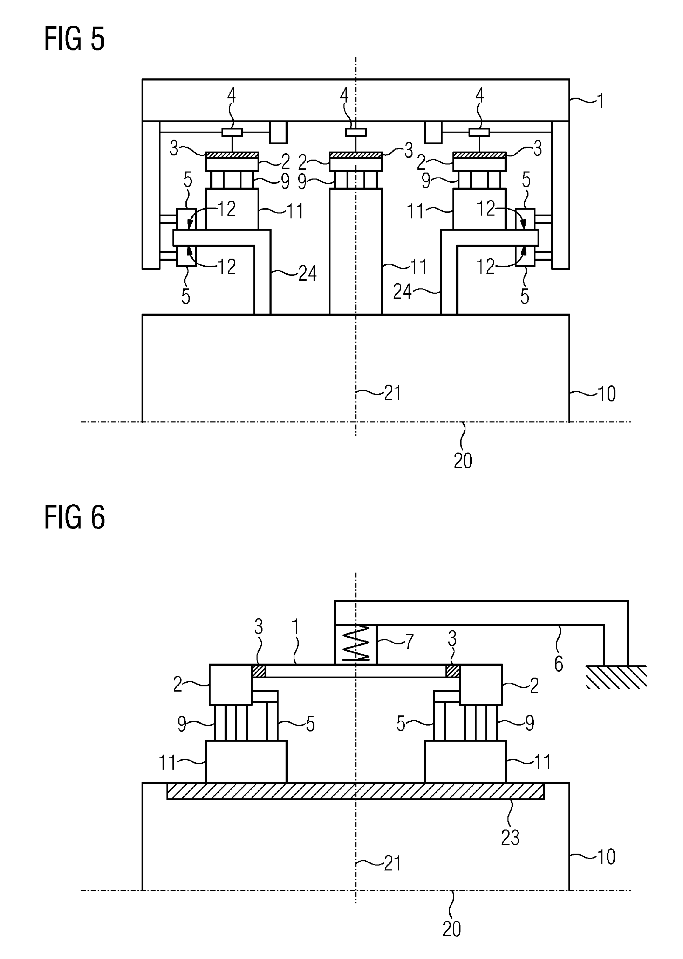

Figur 5 zeigt ein fünftes Ausführungsbeispiel. Die Vorrichtung weist einen Kontaktstückträger 1 auf, welchem drei Kontaktstücke 2 zugeordnet sind. Das jeweilige Kontaktstück 2 ist durch eine jeweilige elektrisch isolierende Schicht 3 vom Kontaktstückträger 1 elektrisch isoliert und dabei jeweils mittels eines elastischen Elements 4 mit dem Kontaktstückträger 1 elastisch gekoppelt. Dabei kann das elastische Element 4 beispielsweise als Feder oder Gelenkaufhängung ausgebildet sein.

Die in der Figur 5 rechts und links dargestellten elastischen Elemente 4 können insbesondere eine radiale und eine axiale Auslenkung des zugehörigen Kontaktstücks 2 ermöglichen, was einen guten elektrischen Kontakt zwischen dem jeweiligen Kontaktstück 2 und dem jeweiligen Schleifring 11 auch bei größeren Exzentrizitäten des zugehörigen Schleifrings 11 gewährleistet. Dabei kann das in der Figur 5 in der Mitte dargestellte elastische Element 4 für eine Rotation des Rotationskörpers 10 um die Rotationsachse 20 eine radiale Auslenkung des zugehörigen Kontaktstücks 2 ermöglichen. Für eine alternative Rotation des Rotationskörpers 10 um die Rotationsachse 21 wird durch dieses elastische Element 4 entsprechend eine axiale Auslenkung des zugehörigen Kontaktstücks 2 ermöglicht.

Die Vorrichtung verfügt weiterhin über vier Führungselemente 5, welche paarweise angeordnet sind und mit dem Kontaktstückträger 1 verbunden sind. In ein jeweiliges Paar von Führungselementen 5 greift jeweils eine Halterung 24 ein, welche Teil des Rotationskörpers 10 ist und jeweils einen der Schleifringe 11 hält. Das jeweilige Führungselement 5 liegt dabei auf einer Oberfläche 12 der Halterung 24 auf. Ein Paar von Führungselementen 5 ist entlang einer Linie angeordnet, wobei zwischen diesem Paar von Führungselementen 5 die zugehörigen Oberflächen 12 angeordnet sind. Dabei ist diese Linie parallel zu einer Anpresskraft der zugehörigen Bürsten 9 auf dem zugehörigen Schleifring 11, so dass durch das jeweilige Paar von Führungselementen 5 ein besonders zuverlässiger Kontakt der Bürsten 9 mit dem Schleifring 11 sichergestellt wird.

Figur 6 zeigt ein sechstes Ausführungsbeispiel. Das sechste Ausführungsbeispiel ist dem zweiten Ausführungsbeispiel ähnlich, weist aber zusätzlich ein Halteelement 6 auf, an welches über ein weiteres elastisches Element 7 der Kontaktstückträger 1 elastisch gekoppelt ist. Durch diese Aufhängung des Kontaktstückträgers 1 und somit der jeweiligen Kontaktstücke 2 können auch große Exzentrizitäten der jeweiligen Schleifringe 11 und eine Schiefstellung der Kontaktstücke 2 ausgeglichen werden.

Zusammenfassend betrifft die Erfindung eine Vorrichtung zum Übertragen eines elektrischen Stromes an einen drehbar gelagerten Rotationskörper, welcher zumindest zwei Schleifringe umfasst, mit einem Kontaktstückträger und zumindest zwei Kontaktstücken, wobei der Kontaktstückträger mit dem jeweiligen Kontaktstück mechanisch verbunden ist, wobei das jeweilige Kontaktstück derart anordenbar ist, dass bei Einbau in eine elektrische Maschine mit dem drehbar gelagerten Rotationskörper das jeweilige Kontaktstück in Kontakt mit dem jeweiligen Schleifring ist. Weiterhin betrifft die Erfindung eine elektrische Maschine mit einer derartigen Vorrichtung und einem derartigen Rotationskörper. Um die Vorrichtung dahingehend weiterzubilden, dass zumindest zwei elektrische Phasen an den Rotationskörper mit hoher Zuverlässigkeit übertragbar sind, wird vorgeschlagen, dass zwischen dem Kontaktstückträger und dem jeweiligen Kontaktstück eine elektrisch isolierende Schicht angeordnet ist.

## Patentansprüche

1. Vorrichtung zum Übertragen eines elektrischen Stromes an einen drehbar gelagerten Rotationskörper (10), welcher zumindest zwei Schleifringe (11) umfasst, mit
- einem Kontaktstückträger (1) und
- zumindest zwei Kontaktstücken (2),
wobei der Kontaktstückträger (1) mit dem jeweiligen Kontaktstück (2) mechanisch verbunden ist,
wobei das jeweilige Kontaktstück (2) derart anordenbar ist, dass bei Einbau in eine elektrische Maschine mit dem drehbar gelagerten Rotationskörper (14) das jeweilige Kontaktstück (2) in Kontakt mit dem jeweiligen Schleifring (11) ist, **dadurch gekennzeichnet, dass** zwischen dem Kontaktstückträger (1) und dem jeweiligen Kontaktstück (2) eine elektrisch isolierende Schicht (3) angeordnet ist.

2. Vorrichtung nach Anspruch 1,
wobei der Kontaktstückträger (1) mit dem jeweiligen Kontaktstück (2) mittels eines jeweiligen elastischen Elementes (4) gekoppelt ist.

3. Vorrichtung nach einem der vorhergehenden Ansprüche, wobei die Vorrichtung zumindest ein Führungselement (5) aufweist,
wobei das jeweilige Führungselement (5) derart anordenbar ist, dass bei Einbau in eine elektrische Maschine mit dem drehbar gelagerten Rotationskörper (10) das jeweilige Führungselement (5) in Kontakt mit zumindest einer Oberfläche (12) des drehbar gelagerten Rotationskörpers (10) ist.

4. Vorrichtung nach Anspruch 3,
wobei jeweils zwei Führungselemente (5) derart anordenbar sind,
dass bei Einbau in eine elektrische Maschine mit dem drehbar gelagerten Rotationskörper (10) die jeweilige Oberfläche (12) zwischen den beiden Führungselementen (5) angeordnet ist.

5. Vorrichtung nach einem der vorhergehenden Ansprüche,
wobei die Vorrichtung ein Halteelement (6) und ein weiteres elastisches Element (7) aufweist,
wobei das Halteelement (6) über das weitere elastische Element (7) mit dem Kontaktstückträger (1) mechanisch gekoppelt ist.

6. Vorrichtung nach einem der vorhergehenden Ansprüche,
wobei zumindest eines der Kontaktstücke (2) in radialer Richtung versetzt zum jeweiligen Schleifring (11) anordenbar ist.

7. Vorrichtung nach einem der vorhergehenden Ansprüche,
wobei zumindest eines der Kontaktstücke (2) in axialer Richtung versetzt zum jeweiligen Schleifring (11) anordenbar ist.

8. Elektrische Maschine mit
- einer Vorrichtung nach einem der vorhergehenden Ansprüche,
- einem drehbar gelagerten Rotationskörper (10) mit zumindest zwei Schleifringen (11).

9. Elektrische Maschine nach Anspruch 8 mit einer Vorrichtung zumindest nach einem der Ansprüche 3 oder 4,
wobei zwischen der jeweiligen Oberfläche (12) und den zumindest zwei Schleifringen (11) zumindest eine weitere elektrisch isolierende Schicht (13) angeordnet ist.

10. Elektrische Maschine nach Anspruch 8 oder 9,
wobei die elektrische Maschine als Windkraftgenerator, Ringmotor, Mühlenantrieb oder Kompressorantrieb ausgeführt ist.
